# EUROPEAN PATENT APPLICATION

(11) **EP 1 955 947 A2**
(43) Date of publication of application: **13.08.2008**
(21) Application number: 07253713.7
(22) Date of filing: 19.09.2007
(51) Int. Cl.: B64C 13/34, F16H 25/20

(54) **Actuator**

(30) Priority: 06.10.2006 GB 0619745
(71) Applicant: Goodrich Actuation Systems Ltd., Solihull West Midlands B90 4LA (GB)
(72) Inventor: Darby, Jonathan Alan Field House, Westlands Newcastle-under-Lyme Staffs ST5 2HB (GB); Bacon, Peter William, The Wergs Wolverhampton WV6 8TZ (GB); Smith, Paul, Aqueduct Telford, Shropshire TF4 3TH (GB)
(74) Representative: Bailey, Richard Alan

(57) **Abstract**

An actuator comprises a drive input (24, 90) arranged to drive a shaft (10) for rotation, a secondary drive train (26b) through which the drive input (24, 90) drives a first input to a comparator device (44), and a tie bar (50) connected to the shaft (10) whereby the shaft (10) is connected to a second input to the comparator device (44), wherein in the event of a difference in the rotary positions of the first and second inputs, the comparator device (44) applies a braking load to the first and second inputs of the comparator device (44).

## Description

This invention relates to an actuator, for example for use in aerospace applications.

Actuators are used in a number of applications to move components between, for example, stowed and deployed or retracted and extended positions. One application in which actuators are used is in the deployment of the flight control surfaces of an aircraft. One form of actuator commonly used in such applications is a linear actuator having an externally threaded shaft arranged to be driven for rotation by a motor and which is held against axial movement by appropriate bearings. A nut encircles the shaft and is held against rotation. A ball or roller coupling is provided between the shaft and the nut such that, in use, rotation of the shaft causes the nut to translate along the shaft. It will be appreciated that, by securing the nut to a flight control surface or other component to be moved, operation of the motor can be used to impart movement to the flight control surface or other component.

In the event of failure of the actuator there is a risk that the flight control surface or other component will move in an uncontrolled or unpredictable manner and this may make the aircraft difficult to control. It is an object of the invention to provide an actuator in which these disadvantages are obviated or mitigated.

According to the present invention there is provided an actuator comprising a drive input arranged to drive a shaft for rotation, a secondary drive train through which the drive input drives a first input to a comparator device, and a tie bar connected to the shaft whereby the shaft is connected to a second input to the comparator device, wherein in the event of a difference in the rotary positions of the first and second inputs, the comparator device applies a braking load to the first and second inputs of the comparator device.

Such an arrangement is advantageous in that, in the event of a failure giving rise to a difference in the inputs to the comparator device, the actuator becomes fixed in position and the tie bar and the shaft are held against rotation thus a flight control surface or other component moved by the actuator is held against further movement, the surface or other component being held in substantially the position it occupied when the failure occurred. The arrangement can thus be regarded as a fail-fixed arrangement.

The drive input conveniently drives the shaft through a primary drive train which is substantially identical in operation to the secondary drive train. The drive input may comprise a motor forming part of the actuator or, preferably, comprises the output of a gearbox driven, in use, by a remotely located motor.

The comparator device preferably comprises a roller jammer device. The first input of the comparator device may be connected to or comprise a cage defining a series of fingers between which rollers are located, and the second input may be connected to or comprise a cam element of non-circular cross-section, the rollers being movable, radially due to engagement with the cam element, in the event of a difference in the rotary positions of the inputs, to jam between the cam element and a housing, thereby resisting rotation of the tie bar and hence the shaft.

A torque limiter may be provided in each of the primary and secondary drive trains.

A dual load path universal joint is conveniently provided to accommodate movement of the axis of the shaft and tie bar.

A brake arrangement is preferably provided to ensure that the failure of the drive to the second input, for example due to a fracture thereof, results in the comparator device operating to allow the failure to be sensed.

A load transmission arrangement is conveniently provided to react load from the tie bar in the event of a failure of the shaft.

The invention will further be described, by way of example, with reference to the accompanying drawings, in which:
Figure 1 is a sectional view illustrating an actuator in accordance with an embodiment of the invention;
Figure 2 is a perspective view illustrating part of the actuator of Figure 1;
Figure 3 is an enlargement of part of Figure 1;
Figure 4 illustrates the comparator device used in the actuator of Figure 1;
Figure 5 is a diagrammatic representation of a torque limiter arrangement; and
Figure 6 is a view similar to Figure 1 illustrating an alternative embodiment.

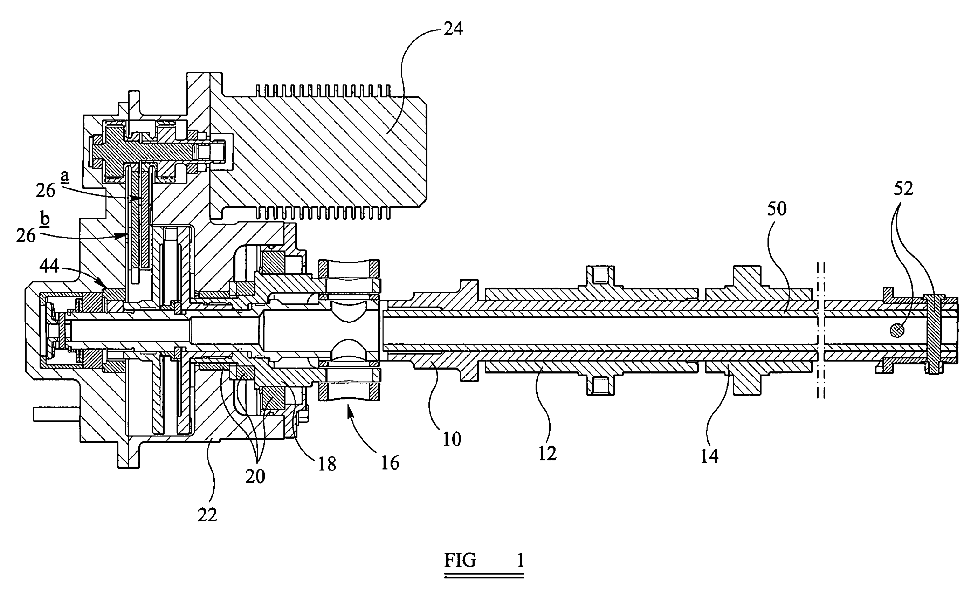

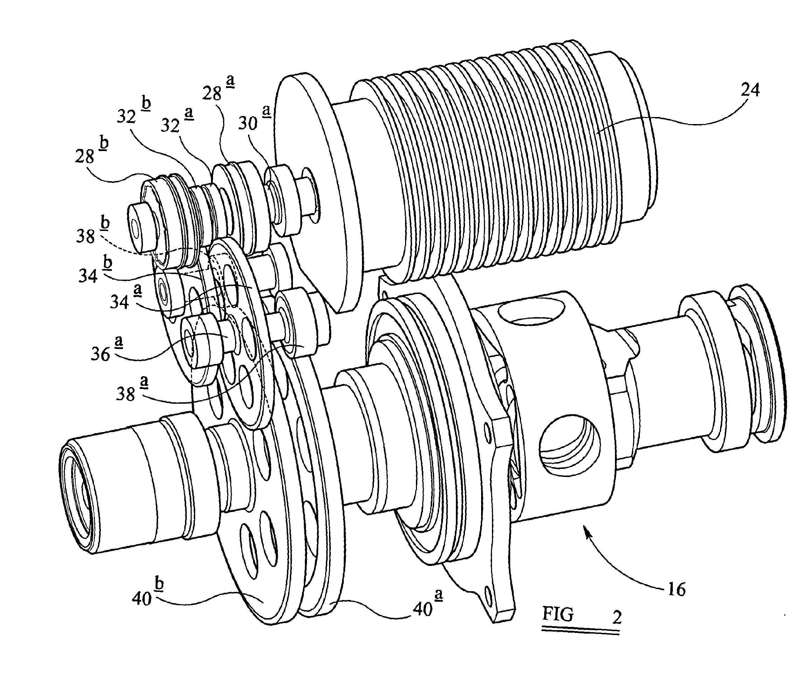

Figures 1 to 5 of the drawings illustrate an actuator intended for use in imparting movement to, and controlling movement of, a flight control surface of an aircraft, however, it could be used in other applications. The actuator comprises a rotatable shaft 10, the outer surface of which is formed with screw-thread formations which co-operate via a ball or roller coupling with primary and secondary nuts 12, 14. The shaft 10 is arranged to be rotatable, but axial movement of the shaft 10 is restricted. The primary and secondary nuts 12, 14 are secured to the flight control surface to be moved by the actuator in such a manner that they are not rotatable. In use, rotation of the shaft 10 causes the nuts 12, 14 to translate along the length of the shaft 10 thereby causing movement of the associated flight control surface. It will be appreciated that the direction of rotary movement of the shaft 10 determines the direction of axial movement of the nuts 12, 14 and hence of the associated flight control surface.

The shaft 10 is coupled, through a dual load path universal joint 16 to a primary drive component 18 supported by bearings 20 for rotary movement relative to a housing 22.

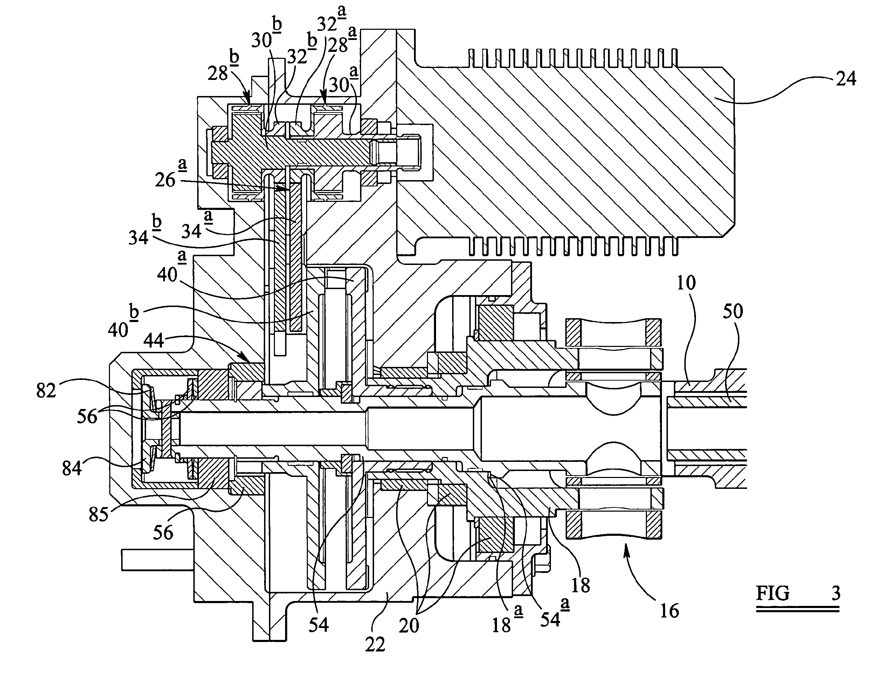

Secured to the housing 22 is a drive input in the form of an electric motor 24 which is arranged to drive the component 18 through a primary drive train 26a. The primary drive train 26a is most clearly visible in Figure 3 and comprises a first torque limiter 28a arranged to be driven from a drive shaft 30a connected to the rotor of the motor 24. The torque limiter 28a is arranged to rotate an input gear 32a which drives an intermediate gear 34a. Gear 34a is mounted upon a shaft 36a such that rotation of the intermediate gear 34a rotates the shaft 36a and a gear 38a mounted thereon, the gear 38a causing rotation of a drive gear 40a. Drive gear 40a is splined to the component 18, thus it will be appreciated that operation of the motor 24 causes the component 18, and hence the shaft 10, to rotate.

A remote end of the rotor of the motor 24 is further coupled, by a shaft extending through the motor, to a secondary drive train 26b through which rotary drive is transmitted to a first input of a comparator device 44 in the form of a roller jammer. The secondary drive train 26b is substantially identical to the primary drive train 26a and comprises a second torque limiter device 28b arranged to drive a second input gear 32b. The drive from the second input gear 32b is transmitted through intermediate gears 34b, 38b to a second drive gear 40b.

The motor conveniently incorporates separate power-off brake devices associated with the outputs thereof to the two torque limiting devices.

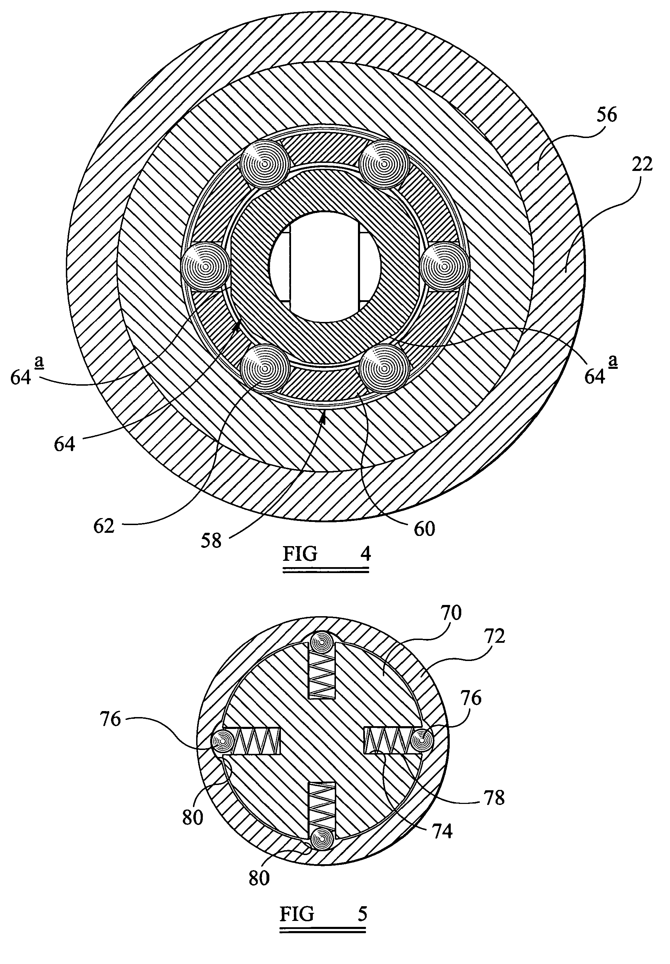

Figure 5 illustrates, diagrammatically, one of the torque limiters 28a, 28b. As illustrated, the torque limiter comprises an inner shaft 70 arranged to be driven from the motor, and an outer sleeve 72 encircling part of the inner shaft 70. The inner shaft 70 is formed with a series of passages 74 in which rollers 76 are located, springs 78 being provided to urge the rollers 76 radially outwards. The inner periphery of the sleeve 72 is provided with pockets 80 arranged to receive the rollers 76. Under normal operation, the rotation of the shaft 70 is transmitted by the rollers 76 to the sleeve 72 to cause rotation thereof at the same speed as the shaft 70. In the event that the sleeve 72 is held against rotation, the rollers 76 can ride out of the pockets 80, against the spring action, thereby allowing the shaft 70 to continue to rotate despite the sleeve 72 having ceased rotation.

The shaft 10 is of hollow tubular form and a tie bar 50 extends along the interior thereof, the tie bar 50 being keyed to the shaft 10 at the end of the shaft 10 remote from the universal joint by pins 52. The nature of the connection between the shaft 10 and the tie bar 50 is such that the tie bar 50 cannot move relative to the shaft 10, either axially or angularly, thus the tie bar 50 rotates with the shaft 10, in use. The tie bar 50 is connected to the universal joint 16 so as to transmit rotary movement thereof to a secondary drive component 54 which extends into the housing 22. The nature of the universal joint 16 is such that the rotary load transmitted to the shaft 10 from the primary drive component 18 is transmitted independently of the transmission of the load between the tie bar 50 and the secondary drive component 54. Such dual load path universal joints are well known and so the universal joint 16 will not be described in further detail. The purpose of the universal joint is to accommodate tilting movement of the shaft 10 as occurs during movement of the flight control surface, in use.

The comparator device 44 comprises an annular casing 56 secured to the housing 22. Within the casing 56 is located a cage 58 in the form of a plurality of spaced fingers 60 secured to an annular drive member (which in this embodiment forms part of the second drive gear 40b). Located between the fingers 60 are roller members 62. The fingers 60 form the first input to the comparator device 44.

The second input to the comparator device 44 comprises a cam part 64 of the secondary drive component 54 which is aligned with the casing 56 and is located such that the fingers 60 and roller members 62 are located radially between the cam part 64 and the casing 56. The cam part 64 is shaped so as to have an exterior surface on which six flats 64a are formed, the flats 64a conveniently being slightly dished. It will be appreciated that the provision of the flats 64a results in the spacing of the cam part 64 from the casing 56 being non-uniform, the spacing being larger than the diameter of the roller members 62, at the centre of each flat 64a, and less than the diameter of the roller members 62 at the edges of the flats 64a. The flats 64a are conveniently spaced apart from one another.

In normal use, extension and retraction of the actuator is achieved by driving the motor 24, the rotation of the motor being transmitted through the primary and second drive trains. The rotation of the primary drive train is transmitted through the universal joint to the shaft 10, thereby causing extension or retraction of the actuator. The rotation of the shaft 10 is transmitted to the tie bar 50, and through the universal joint to the secondary drive component 54.

It will be appreciated that if the actuator is operating normally, the first and second inputs to the comparator device 44, ie the fingers 60 and the cam part 64, are driven for rotation at the same speed, the fingers 60 being driven by the second drive train whilst the cam part 64 is driven from the shaft 10 via the tie bar 50.

In the event of a failure, for example, in the primary drive train, it will be appreciated that the first and second inputs to the comparator device 44 will no longer rotate at the same speed, thus relative angular movement will occur therebetween. In the event of such relative angular movement occurring, it will be appreciated that the relative angular movement forces the roller members 62 from the positions illustrated in Figure 4 in which they lie approximately centrally relative to the flats 64a of the cam part 64, towards the edges thereof at which the clearance between the cam part 64 and the casing 56 is reduced, and a point will be reached at which the roller members 62 bear against both the cam part 64 and the casing 56, jamming in position and applying a braking load to the cam part 64 to prevent further rotation of the first and second inputs. It will be appreciated that as the cam part 64 is provided on the secondary drive component which is secured, through the universal joint 16, to the tie bar 50, and hence to the shaft 10, the shaft 10 is also held against rotation thus further extension or retraction of the actuator is prevented.

Although in the description hereinbefore it is suggested that the shaft 10 is driven only via the primary drive train, in practise the comparator device 44 is capable of transmitting some torque, and so some of the drive to the shaft can be transmitted through the secondary drive train 28b, the comparator device 44, the secondary drive component and the tie bar 50.

In the event of a failure causing the comparator device 44 to operate to hold the shaft 10 against rotation, the control system used to control the operation of the motor 24 will receive signals indicating that movement of the flight control surface is not occurring despite the motor 24 operating and this information used to sense that there has been a failure and the motor 24 switched off. However, there will be a short time lag before such switching off of the motor 24 occurs and in order to reduce further damage which could occur in the meantime, the torque limiter devices 28a, 28b are provided in the primary and second drive trains.

It will be appreciated that the comparator device 44 is sensitive to failures occurring in the first and second drive trains, for example due to stripping of the teeth from the gears, break up of the gears, failure or seizure of a bearing or other forms of jamming. It is also sensitive to failure of the shaft 10, the universal joint 16 or the connection between the shaft and the tie bar.

There is a risk that, if the universal joint 16 or shaft 10 were to fail, a significant axial loading could be applied by the flight control surface to the tie bar 50. The tie bar 50 is not provided with bearing means to allow the transmission of such loads to the housing 22, thus the application of such loads could result in significant damage to the actuator. To reduce the risk of such damage, the primary and secondary drive components 18, 54 are provided with abutments 18a, 54a which, in normal use, are spaced apart from one another by a small distance but which are arranged such that, in the event of the failure of the universal joint 16 or shaft 10 and a load being applied to the secondary drive component 54, the abutment provided on the secondary drive component 54 can move into engagement with that provided on the primary drive component 18 so as to transmit loadings applied to the tie bar to the primary drive component 18 to be reacted through the bearings 20 which support the primary drive component 18 in the usual manner. A disc spring 82 is provided to accommodate such movement of the secondary drive component 54.

The secondary drive component 54, at its end remote from the universal joint 16, carries a brake disc member 84. In normal use, the bearings 85 which support the secondary drive component 54, and particularly 'the operation of the universal joint 16, hold the secondary drive component 54 in an axial position in which the brake disc member 84 is spaced from the housing 22 and so does not apply a braking load. In the event of the secondary drive component 54 fracturing, disc springs 86 will apply an axial load to the secondary drive component 54, urging the brake disc member 84 into contact with the housing 22 thereby applying a braking load to the secondary drive component 54 and causing a difference between the relative positions of the two inputs to the comparator device 44. Consequently, the comparator device 44 will seize or jam as described hereinbefore, resulting in the actuator being held in a fixed position as described hereinbefore.

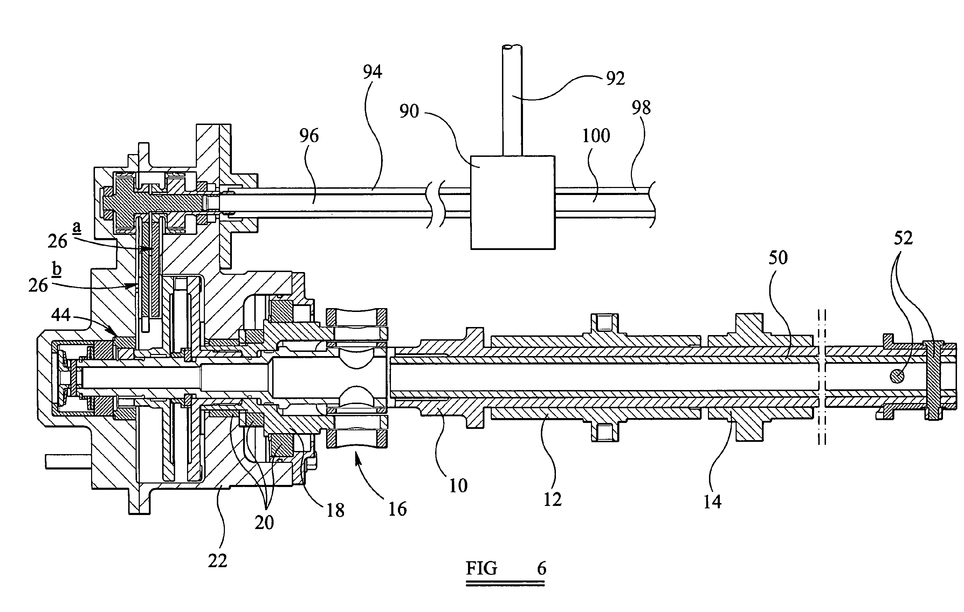

Figure 6 illustrates a modification to the embodiment of Figures 1 to 5 in which the drive input, instead of comprising a motor 24 mounted on the housing 22, comprises the output of a gear box 90 driven by a remotely located motor or power drive unit (not shown). The motor or power drive unit is operable to drive an input shaft 92 of the gearbox 90, and such rotation is transmitted by the gearbox 90 to a pair of concentric drive shafts 94, 96 operable to drive, respectively, the drive shafts 30a, 30b. The gearbox 90 may have other, similar, concentric drive shafts 98, 100 operable to drive other actuators.

It will be appreciated that the actuator of the invention is advantageous in that the actuator can be held against further movement in the event of a number of possible failures, and thus that a component, for example in the form of a flight control surface, moved using the actuator can also be held in a fixed position, reducing the risk of loss of control.

It will be appreciated that a wide range of modifications and alterations may be made to the arrangement described hereinbefore without departing from the scope of the invention.

## Claims

1. An actuator comprising a drive input (24, 90) arranged to drive a shaft (10) for rotation, a secondary drive train (26b) through which the drive input (24, 90) drives a first input to a comparator device (44), and a tie bar (50) connected to the shaft (10) whereby the shaft (10) is connected to a second input to the comparator device (44), wherein in the event of a difference in the rotary positions of the first and second inputs, the comparator device (44) applies a braking load to the first and second inputs of the comparator device (44).

2. An actuator according to Claim 1, wherein the drive input (24, 90) drives the shaft (10) through a primary drive train (26a) which is substantially identical in operation to the secondary drive train (26b).

3. An actuator according to Claim 2, wherein a torque limiter (28a, 28b) is provided in each of the primary and secondary drive trains (26a, 26b).

4. An actuator according to any of Claims to 3, wherein the drive input (24, 90) comprises a motor forming part of the actuator.

5. An actuator according to any of Claims 1 to 3, wherein the drive input (24, 90) comprises the output of a gear box driven, in use, by a remotely located motor.

6. An actuator according to any of the preceding claims, wherein the comparator device (44) comprises a roller jammer device.

7. An actuator according to Claim 6, wherein the first input of the comparator device (44) is connected to or comprises a cage defining a series of fingers (60) between which rollers are located.

8. An actuator according to Claim 6 or Claim 7, wherein the second input is connected to or comprises a cam element (64) of non-circular cross-section.

9. An actuator according to any of the preceding claims, wherein a dual load path universal joint (16) is provided to accommodate movement of the axis of the shaft (10) and tie bar (50).

10. An actuator according to any of the preceding claims, further comprising a brake arrangement to ensure that the failure of the drive to the second input results in the comparator device (44) operating to allow the failure to be sensed.

11. An actuator according to any of the preceding claims, further comprising a load transmission arrangement to react load from the tie bar (50) in the event of a failure of the shaft (10).
